# EUROPÄISCHE PATENTSCHRIFT

(11) **EP 3 984 858 B1**
(45) Veröffentlichungstag und Bekanntmachung des Hinweises auf die Patenterteilung: **05.11.2025**
(21) Anmeldenummer: 21199713.5
(22) Anmeldetag: 29.09.2021
(51) Int. Cl.: B62B 3/06, B62B 5/00, B66F 9/06, B66F 9/075

(54) **VERFAHREN ZUM ERFASSEN EINER INFORMATION ÜBER DIE AUSBREITUNG EINES WARENTRÄGERS BEI EINEM ZUMINDEST TEILWEISE AUTOMATISIERT BETREIBBAREN FLURFÖRDERFAHRZEUGS**
METHOD FOR DETECTING INFORMATION ON THE SPREAD OF A PRODUCT CARRIER IN AN AT LEAST PARTIALLY AUTOMATED INDUSTRIAL TRUCK
PROCÉDÉ DE DÉTERMINATION DES INFORMATIONS SUR LA PROPAGATION D'UN SUPPORT DE MARCHANDISES DANS UN CHARIOT DE MANUTENTION À FONCTIONNEMENT AU MOINS PARTIELLEMENT AUTOMATISÉ

(30) Priorität: 14.10.2020 DE 102020212971
(43) Veröffentlichungstag der Anmeldung: 20.04.2022
(73) Patentinhaber: Robert Bosch GmbH, 70442 Stuttgart (DE)
(72) Erfinder: Roethling, Frank, 70469 Stuttgart (DE); Strouhal, Patrick, 71540 Murrhardt (DE)

(56) Entgegenhaltungen:
- EP-A1- 2 385 014
- EP-A1- 3 251 918
- EP-A1- 3 369 696
- DE-A1- 102019 107 096

## Beschreibung

Die Erfindung betrifft ein Verfahren zum Erfassen einer Information über die Ausbreitung eines Warenträgers, der mittels eines zumindest teilweise automatisiert betreibbaren Flurförderfahrzeugs transportierbar ist, in mindestens einer Ausbreitungsrichtung. Weiterhin werden auch ein Computerprogramm, ein maschinenlesbares Speichermedium, ein Steuergerät, ein System, ein Flurförderfahrzeug sowie eine Verwendung angegeben. Die Erfindung kann insbesondere zur möglichst sicheren und automatischen Unterscheidung zwischen 400er und 600er Dollys (Warenträger) Anwendung finden, wenn ein solcher Dolly auf ein Flurförderfahrzeugs aufgeladen werden soll bzw. wird.

Zumindest teilweise automatisiert oder sogar autonom betreibbare Flurförderfahrzeuge sind bekannt, diese können allgemein auch als (automatisierte bzw. autonome) Flurförderzeuge (engl.: Automated Guided Vehicles; kurz: AGVs) bezeichnet werden. Entsprechende Flurförderfahrzeuge sind beispielsweise in der EN 1525 definiert. Um einen möglichst sicheren Transport realisieren zu können, sollte das Transportgut, welches üblicherweise in einem Warenträger (in dem betreffenden Gebiet häufig auch als "Dolly" bezeichnet) gelagert ist, möglichst nahe am Schwerpunkt des Flurförderfahrzeugs transportiert werden.

Bei Flurförderfahrzeugen mit einem (relativ zur Ladefläche bzw. Ladeplattform) erhöhten Vorderaufbau soll der Warenträger üblicherweise so aufgeladen werden, dass dessen vordere Stirnseite (möglichst formschlüssig) an oder zumindest möglichst dicht an der Rückseite bzw. der rückwärtigen Stirnwand des Vorderaufbaus angeordnet ist bzw. an dieser angrenzt, wodurch ein Vornüberkippen und/oder eine Beschädigung der Ladung (des Transportgutes in dem Warenträger) bei einem Not-Halt und/oder abruptem Bremsvorgang in Fahrtrichtung möglichst verhindert werden soll.

Daher sind für einen automatisierten Betrieb, der in der Regel auch automatisierte Aufladevorgänge umfasst, Sensoren in oder an dem Flurförderfahrzeug vorteilhaft, die dazu dienen, die korrekte Positionierung des Warenträgers auf der Ladeplattform zu überwachen. Häufig kommen in diesem Zusammenhang mindestens zwei in Längsrichtung zueinander beabstandete Ladeplattform-Sensoren zum Einsatz. Dies beschreibt Sensoren, die zur Erfassung der Positionierung des Warenträgers auf der Ladeplattform in und/oder an der Ladeplattform angeordnet sind. Entsprechende Sensoren sind insbesondere für einen Mischbetrieb, bei dem mit einem Flurförderfahrzeug nacheinander Warenträger unterschiedlicher Länge automatisiert aufgeladen und transportiert werden sollen, wichtig. Insbesondere für den Mischbetrieb ist man bisher davon ausgegangen, dass die Verwendung von mindestens zwei in Längsrichtung zueinander beabstandeten Ladeplattform-Sensoren, von denen der eine für die korrekte Lagerung auf der Ladeplattform und der andere für die Erkennung der Länge des Warenträgers zuständig sind, unerlässlich ist.

Darüber hinaus sind in und/oder an dem Flurförderfahrzeug in der Regel auch Sicherheitssensoren angeordneten, die zur Überwachung des Umfelds um das Flurförderfahrzeug dienen. Hierzu können beispielsweise Sensoren zur Überwachung mindestens eines Warnfelds und/oder Schutzfelds im Umfeld des Flurförderfahrzeugs zum Einsatz kommen. Wenn ein Objekt, wie etwa eine Person oder ein Teil davon in einem Warnfeld oder Schutzfeld von einem Sicherheitssensor erfasst wird, ist das Flurförderfahrzeug diesem Objekt üblicherweise zu nah gekommen, sodass in der Regel der Betrieb des Flurförderfahrzeugs insbesondere entsprechend des Feldes und/oder der Art des Feldes, in dem das Objekt erfasst wurde, beeinflusst wird, um eine Kollision mit dem Objekt möglichst zu vermeiden.

Bei Flurförderfahrzeugen, mit welchen bei möglichst hoher Betriebssicherheit ein Mischbetrieb möglich sein soll, besteht somit der Nachteil, dass diese in der Regel mit einer Vielzahl von insbesondere unterschiedlichen Sensoren auszustatten sind. Dies wirkt sich insbesondere nachteilig auf die Materialkosten für solche Flurförderfahrzeuge aus. Weiterhin können sich die vielen unterschiedlichen Sensoren auch nachteilig auf die Lagerhaltungskosten für Ersatzteile für entsprechende Flurförderfahrzeuge auswirken. Zudem können sich die vielen Sensoren auch nachteilig auf die Betriebszeiten der Flurförderfahrzeuge auswirken, da mit der Anzahl der verwendeten Sensoren häufig auch das Ausfallrisiko steigt.

Beispielsweise sind aus der DE 10 2019 107 096 A1, der EP 3 251 918 A1 und der EP 3 369 696 A1 jeweils Flurförderfahrzeuge bekannt, die eine Vielzahl von Sensoren zum Betrieb benötigen. Insbesondere hat jedes dieser Flurförderfahrzeuge einen Abstandssensor, der eigens zur Erfassung der Position des Transportgutes vorgesehen ist.

Aus der EP 2 385 014 A1 ist ein Flurförderfahrzeug bekannt, welches einen auch zur Kollisionsvermeidung dienenden, berührungslosen Entfernungssensor zur Identifizierung des geladenen Transportgutes nutzt. Hierzu müssen dort jedoch eine Vielzahl von Messwerten berücksichtigt werden, um geometrische Merkmale der Transportgüter zu ermitteln, die mit gespeicherten Merkmalen der verschiedenen Transportgüter verglichen werden. Ein entsprechendes Vorgehen erfordert üblicherweise einen vergleichsweise hohen Rechenaufwand und Speicherkapazität.

Hiervon ausgehend liegt der Erfindung die Aufgabe zugrunde, die im Zusammenhang mit dem Stand der Technik beschriebenen Nachteile bzw. Probleme zumindest teilweise zu lösen. Insbesondere soll bei einem zumindest teilweise automatisiert betreibbaren Flurförderfahrzeug, welches insbesondere auch für einen Mischbetrieb geeignet sein soll, bei gleichwohl möglichst hoher Betriebssicherheit die Anzahl der verwendeten Sensoren reduziert werden.

Diese Aufgaben werden durch die Merkmale der jeweiligen unabhängigen Ansprüche gelöst. Vorteilhafte Ausgestaltungen ergeben sich aus den Unteransprüchen.

Hierzu trägt ein Verfahren zum Erfassen einer Information über die Ausbreitung eines Warenträgers, der mittels eines zumindest teilweise automatisiert betreibbaren Flurförderfahrzeugs transportierbar ist, in mindestens einer Ausbreitungsrichtung bei, bei dem zumindest folgende Schritte automatisiert von dem Flurförderfahrzeug durchgeführt werden:
a) Anfahren einer relativ zu dem Warenträger vordefinierten, initialen Position, wobei das Erreichen der initialen Position mittels einer Sensor-Einrichtung des Flurförderfahrzeugs detektiert wird,
b) Abfahren einer vordefinierten Strecke entlang der Ausbreitungsrichtung, ausgehend von der initialen Position,
c) Durchführen eines weiteren Detektionsvorgangs mittels derselben Sensor-Einrichtung des Flurförderfahrzeugs, nachdem die vordefinierte Strecke abgefahren wurde.

Die Schritte a), b) und c) können zur Durchführung des Verfahrens beispielsweise zumindest einmal und/oder wiederholt in der angegebenen Reihenfolge durchgeführt werden. Das Verfahren kann beispielsweise mittels eines hier auch beschriebenen Steuergeräts und/oder eines hier auch beschriebenen Systems und/oder eines hier auch beschriebenen Flurförderfahrzeugs durchgeführt werden. Bei dem Verfahren können zumindest die Schritte a), b) und c) vorteilhaft autonom von dem Flurförderfahrzeug durchgeführt werden.

Das Verfahren trägt in vorteilhafter Weise dazu bei, dass mindestens ein (induktiver) Sensors zur Erkennung der Länge des Warenträgers eingespart werden kann. Hierzu wird erstmals ein Verfahren angegeben, durch welches in besonders vorteilhafter Weise mittels eines vorhandenen Sicherheitssensors als Sensor-Einrichtung eine Erkennung der Länge des Warenträgers ermöglicht wird.

Bei dem Flurförderfahrzeug kann es sich beispielsweise um ein solches handeln, wie es in der EN 1525 definiert ist. Das Flurförderfahrzeug kann für einen zumindest teilweise automatisierten und/oder autonomen (Fahr-)Betrieb eingerichtet sein. Das Flurförderfahrzeug weist in der Regel eine Ladeplattform auf. Weiterhin kann das Flurförderfahrzeug einen Vorderaufbau aufweisen. Der Vorderaufbau hat in der Regel hin zu der Ladeplattform eine im Wesentlichen vertikale Rückwand. In dem Bereich, in dem die Ladeplattform an die Rückwand angrenzt bzw. an dieser endet, kann ein Ladeplattform-Sensor des Flurförderfahrzeugs angeordnet sein. Der Ladeplattform-Sensor dient üblicherweise zur Erkennung der korrekten Lagerung des Warenträgers auf der Ladeplattform. Der Ladeplattform-Sensor kann beispielsweise ein induktiver Sensor sein.

Die Sensor-Einrichtung kann rückwärtig am Flurförderfahrzeug und/oder im Bereich des hinteren Endes der Ladeplattform angeordnet sein. Die Sensor-Einrichtung ist bevorzugt dazu eingerichtet mindestens ein Warnfeld und/oder mindestens ein Schutzfeld im Umfeld des Flurförderfahrzeug, insbesondere hinter dem Flurförderfahrzeug zu überwachen oder zumindest zu diesem Zweck beispielsweise mittels Laserstrahlen abzutasten bzw. zu scannen. Die Sensor-Einrichtung kann (auch) einen Sicherheitssensor des Flurförderfahrzeugs darstellen bzw. dessen Funktionen ausführen. Die Sensor-Einrichtung kann vorzugsweise als ein Laserscanner ausgeführt sein oder einen solchen umfassen. Die Sensor-Einrichtung ist in der Regel überwiegend nach hinten oder nach hinten und zu den Seiten (zu der linken Seite und der rechten Seite des Flurförderfahrzeugs) ausgerichtet. Es kann dabei vorgesehen sein, dass die Sensor-Einrichtung nicht nach oben ausgerichtet ist. Insbesondere kann das Flurförderfahrzeug hier beispielhaft ohne einen hinteren Ladeplattform-Sensor ausgeführt sein und/oder ein solcher bei der Erfassung gemäß dem hier beschriebenen Verfahren nicht zur Anwendung kommen.

Bei dem Warenträger kann es sich beispielswiese um einen Rollwagen handeln, in und/oder auf dem Transportgüter insbesondere zum Transport gelagert werden können. Der Warenträger kann mit mindestens zwei in seitlicher Richtung zueinander beabstandeten Vorderrädern und mit mindestens zwei in seitlicher Richtung zueinander beabstandeten Hinterrädern ausgestattet sein. Der seitliche Abstand dieser Räder kann beispielsweise jeweils so dimensioniert sein, dass der Warenträger derart von dem Flurförderfahrzeug unterfahren werden kann, dass der Warenträger (durch das Unterfahren) auf einer Ladeplattform des Flurförderfahrzeugs aufgeladen werden kann. Entsprechende Warenträger können allgemein auch als "Dolly" bezeichnet werden. Die Vorderräder und die Hinterräder weisen weiterhin je nach Länge des Warenträgers in der Regel einen bestimmten Abstand in Längsrichtung zueinander auf. Somit können die Vorderräder und die Hinterräder hier als besonders vorteilhaftes Identifikationsmittel für die Länge des Warenträgers dienen. Alternativ oder kumulativ können an dem Warenträger in Längsrichtung mit einem bestimmten Abstand zueinander beabstandete (andere) Identifikationsmittel, die von der Sensor-Einrichtung erfasst werden können, vorgesehen sein. Beispielswiese kann in diesem Zusammenhang mindestens ein vorderes Identifikationsmittel und mindestens ein hinteres Identifikationsmittel vorhanden sein. Dier Längsabstand zwischen dem vorderen Identifikationsmittel und dem hinteren Identifikationsmittel kann vorteilhaft charakteristisch für die den Typ des Warenträgers und/oder die Länge des Warenträgers sein.

Bei der Ausbreitungsrichtung kann es sich beispielsweise um die Längsrichtung handeln. Die Ausbreitung des Warenträgers kann insbesondere die Länge des Warenträgers betreffen. Bei der Information über die Ausbreitung des Warenträgers kann es sich beispielweise unmittelbar um die Länge des Warenträgers oder um eine Information, die einen Rückschluss auf die Länge des Warenträgers erlaubt, handeln. Die Information kann beispielsweise charakteristisch für einen bestimmten Typ von Warenträger sein. Dadurch kann das Verfahren vorteilhaft auch zu einer Unterscheidung beitragen, welcher Typ Warenträger (aus einer definierten Anzahl von Typen von Warenträgern) auf das Flurförderfahrzeug aufgeladen wird. Besonders vorteilhaft kann das Verfahren zur Unterscheidung zwischen den zwei Typen 400er Dolly (400mm langer Warenträger) und 600er Dolly (600mm langer Warenträger) zum Einsatz kommen.

In Schritt a) erfolgt ein Anfahren einer relativ zu dem Warenträger vordefinierten, initialen Position, wobei das Erreichen der initialen Position mittels einer Sensor-Einrichtung des Flurförderfahrzeugs detektiert wird. Die initiale Position ist derart relativ zum Warenträger vordefiniert, dass es sich hierbei um diejenige Position handelt, in der mindestens ein vorderes Identifikationsmittel des Warenträgers, wie etwa mindestens ein Vorderrad des Warenträgers (gerade bzw. erstmals) in einem mittels der Sensor-Einrichtung überwachten Warnfeld liegt. Vorzugsweise kann vorgesehen sein, dass hierbei beide Vorderräder des Warenträgers in jeweils einem Warnfeld (von zwei Warnfeldern) liegen (müssen). Diese (zwei) Warnfelder können beispielswiese an einem von dem Flurförderfahrzeug abgewandten bzw. hinteren Ende eines Schutzfeldes platziert sein, das (ebenfalls) mittels der Sensor-Einrichtung überwacht wird. Das Schutzfeld dient dabei in der Regel dazu, die weitere Bewegung zu verändern oder sogar zu stoppen, wenn ein Objekt im Schutzfeld detektiert wird. Dies bedeutet mit anderen Worten insbesondere, dass das Schutzfeld im Vergleich zum Warenfeld eine "härtere" Begrenzung für die Operationen des Flurförderfahrzeug darstellt.

In Schritt b) erfolgt ein Abfahren einer vordefinierten Strecke entlang der Ausbreitungsrichtung, ausgehend von der initialen Position. Die Strecke ist dabei so vordefiniert, dass sie geeignet ist, um mindestens zwei Typen von Warenträgern voneinander unterscheiden zu können, die sich in ihrer Ausbreitung entlang der Ausbreitungsrichtung, insbesondere in ihrer Länge voneinander unterscheiden. Um die Strecke (ungehindert) abfahren zu können, kann es ggf. vorteilhaft sein, zunächst das Schutzfeld umzuschalten bzw. zu verändern, um den Warenträger (überhaupt) unterfahren zu können. Insbesondere kann das Schutzfeld hierbei (in seitlicher Richtung) schmäler geschaltet werden, sodass die Räder des Warenträgers (während des Unterfahrens des Warenträgers) nicht in dem Schutzfeld liegen. Bei dem Umschalten des Schutzfeldes können die Warnfelder ggf. näher an das Flurförderfahrzeug rücken. Ein dadurch ggf. zu berücksichtigender Distanzunterschied kann in die Vordefinition der Strecke mit einfließen bzw. dabei berücksichtigt werden.

In Schritt c) erfolgt ein Durchführen eines weiteren Detektionsvorgangs mittels derselben Sensor-Einrichtung des Flurförderfahrzeugs, nachdem die vordefinierte Strecke abgefahren wurde. Die Strecke ist so vordefiniert, das bei einem ersten (kürzeren) der mindestens zwei Typen von Warenträgern bei dem Detektionsvorgang gemäß Schritt c) mindestens ein hinteres Identifikationsmittel des Warenträgers, wie etwa mindestens ein Hinterrad des Warenträgers (gerade bzw. erstmals) in dem mittels der Sensor-Einrichtung überwachten Warnfeld liegt. Vorzugsweise kann vorgesehen sein, dass hierbei beide Hinterräder des Warenträgers in jeweils einem Warnfeld (der zwei Warnfelder) liegen (müssen). Demnach würde bei einem Unterfahren eines zweiten (längeren) der mindestens zwei Typen von Warenträgern bei dem Detektionsvorgang gemäß Schritt c) kein Identifikationsmittel des Warenträgers, insbesondere kein (Hinter-)Rad des Warenträgers in dem mittels der Sensor-Einrichtung überwachten Warnfeld liegen.

In einem Schritt d) erfolgt ein Auswerten des Detektionsvorgangs aus Schritt c), um in Abhängigkeit des Detektionsergebnisses aus Schritt c) zu ermitteln, welcher Typ von Warenträger (aus mindestens zwei Typen von Warenträgern) gerade unterfahren bzw. aufgeladen wird. Dabei kann beispielsweise ermittelt werden, dass gerade ein erster (kürzerer) der mindestens zwei Typen von Warenträgern unterfahren bzw. aufgeladen wird, wenn nach dem Abfahren der vordefinierten Strecke das mindestens eine hintere Identifikationsmittel detektiert wird. Weiterhin kann beispielhaft ermittelt werden, dass gerade ein zweiter (längerer) der mindestens zwei Typen von Warenträgern unterfahren bzw. aufgeladen wird, wenn nach dem Abfahren der vordefinierten Strecke kein hinteres Identifikationsmittel detektiert wird. Alternativ oder kumulativ können nach Schritt c) die Zustände der Warnfelder als Information für den weiteren Aufund Abladevorgang abgespeichert werden.

Nach einer vorteilhaften Ausgestaltung wird vorgeschlagen, dass die Schritte a) bis c) während eines Aufladens des Warenträgers auf das Flurförderfahrzeug durchgeführt werden. Zum Aufladen des Warenträgers auf das Flurförderfahrzeug bzw. auf eine Ladeplattform des Flurförderfahrzeug kann der Warenträger beispielsweise von zumindest einem Teil des Flurförderfahrzeugs, wie etwa dem Längsabschnitt des Flurförderfahrzeugs mit der Ladeplattform unterfahren werden. Dies kann in vorteilhafter Weise dazu beitragen, dass (direkt) beim Aufladen des Warenträgers auf das Flurförderfahrzeug verschiedene Typen von Warenträgern (unterschiedlicher Länge) erkannt werden können.

Nach einer weiteren vorteilhaften Ausgestaltung wird vorgeschlagen, dass mittels der Sensor-Einrichtung mindestens ein Warnfeld im Umfeld des Flurförderfahrzeugs überwacht wird. Bevorzugt überwacht die Sensor-Einrichtung mindestens zwei Warnfelder hinter dem bzw. rückseitig des Flurförderfahrzeugs. Weiterhin kann mittels der Sensor-Einrichtung mindestens ein Schutzfeld im Umfeld des Flurförderfahrzeugs überwacht werden. Insbesondere kann (somit) ein (sonst) zum Personenschutz vorgesehener rückwärtiger Laserscanner als Sensor-Einrichtung genutzt werden, um über zusätzliche Warnfelder, die zeitgleich zum (Personen-)Schutzfeld geschaltet und ggf. ausgewertet werden, das Erfassen der Information über die Ausbreitung (Länge) des Warenträgers und ggf. damit eine Unterscheidung zwischen mindestens zwei Typen von Warenträgern (unterschiedlicher Länge) zu ermöglichen.

Nach einer weiteren vorteilhaften Ausgestaltung wird vorgeschlagen, dass die Sensor-Einrichtung das mindestens eine Warnfeld mittels Laserstrahlen scannt. In diesem Zusammenhang kann die Sensor-Einrichtung beispielsweise als ein Laserscanner ausgeführt sein. Insbesondere handelt es sich dabei um einen Laserscanner der (sonst) auch zur Überwachung mindestens eines (Personen)Schutzfelds im Umfeld des Flurförderfahrzeugs, insbesondere hinter dem Flurförderfahrzeug eingesetzt wird.

Nach einem weiteren Aspekt wird ein Computerprogramm zur Durchführung eines hier beschriebenen Verfahrens vorgeschlagen. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist. Regelmäßig handelt es sich bei dem maschinenlesbaren Speichermedium um einen computerlesbaren Datenträger.

Nach einem weiteren Aspekt wird auch ein Steuergerät für ein zumindest teilweise automatisiert betreibbares Flurförderfahrzeug vorgeschlagen, wobei das Steuergerät zur Durchführung eines hier beschriebenen Verfahrens eingerichtet ist. Das Steuergerät (Controller) kann beispielsweise einen Rechner umfassen, der Befehle ausführen kann, um das Verfahren auszuführen. Hierzu kann der Rechner bzw. das Steuergerät beispielsweise das angegebene Computerprogramm ausführen. Beispielsweise kann der Rechner bzw. das Steuergerät auf das angegebene Speichermedium zugreifen, um das Computerprogramm ausführen zu können.

Nach einem weiteren Aspekt wird auch ein System für ein zumindest teilweise automatisiert betreibbares Flurförderfahrzeug vorgeschlagen, wobei das System zumindest das Steuergerät und eine Sensor-Einrichtung, die mit dem Steuergerät zur Datenübertragung verbindbar ist, umfasst. Bei der Sensor-Einrichtung handelt es sich in der Regel um diejenige Sensor-Einrichtung, die in dem Verfahren zum Einsatz kommt.

Nach einem weiteren Aspekt wird auch ein zumindest teilweise automatisiert betreibbares Flurförderfahrzeug mit dem System vorgeschlagen. Alternativ oder kumulativ kann dies auch als ein zumindest teilweise automatisiert betreibbares Flurförderfahrzeug beschrieben werden, das zur Durchführung eines hier beschriebenen Verfahrens eingerichtet ist. Das Flurförderfahrzeugs ist darüber hinaus in der Regel für einen zumindest teilweise automatisierten oder autonomen (Fahr-)Betrieb eingerichtet.

Nach einem weiteren Aspekt wird auch eine Verwendung eines rückseitig an einem zumindest teilweise automatisiert betreibbaren Flurförderfahrzeugs angebrachten Laserscanners zum automatisierten Erfassen einer Information über die Ausbreitung eines Warenträgers, der mittels des Flurförderfahrzeugs transportiert werden soll, in mindestens einer Ausbreitungsrichtung vorgeschlagen.

Zusammenfassend kann eine besonders vorteilhafte Ausgestaltung der hier beschriebenen Lösung mit anderen Worten insbesondere (und ggf. alternativ) auch so beschrieben werden, dass beim Aufladen von Dollys auf ein autonomes Transportfahrzeug verschiedene Typen von Dollys (unterschiedlicher Länge) erkannt werden sollen. Dazu wird vorteilhaft ein Verfahren genutzt, bei dem mit Hilfe eines am Fahrzeug rückseitig angebrachten Laserscanners die Räder der Dollys mit Hilfe von Warnfeldern erkannt werden. Nachdem die vorderen Räder erkannt worden sind und das Fahrzeug eine vorgegebene Strecke unter den Dolly eingefahren ist, wird durch wenigstens eine zweite Abfrage der Warnfelder die Länge des Dollys bestimmt.

Die im Zusammenhang mit dem Verfahren erörterten Details, Merkmale und vorteilhaften Ausgestaltungen können entsprechend auch bei dem hier vorgestellten Computerprogram und/oder dem Speichermedium und/oder dem Steuergerät und/oder dem System und/oder dem Flurförderfahrzeug und/oder der Verwendung auftreten und umgekehrt. Insoweit wird auf die dortigen Ausführungen zur näheren Charakterisierung der Merkmale vollumfänglich Bezug genommen.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigt beispielhaft und schematisch:
- Fig. 1:: zwei Flurförderfahrzeuge nach dem Stand der Technik in Draufsicht,
- Fig. 2:: einen beispielhaften Ablauf des hier vorgestellten Verfahrens,
- Fig. 3:: eine Ausführungsform eines hier beschriebenen Flurförderfahrzeugs in Schnittdarstellung, und
- Fig. 4-7:: eine vorteilhafte Anwendung des hier beschriebenen Verfahrens in Draufsicht.

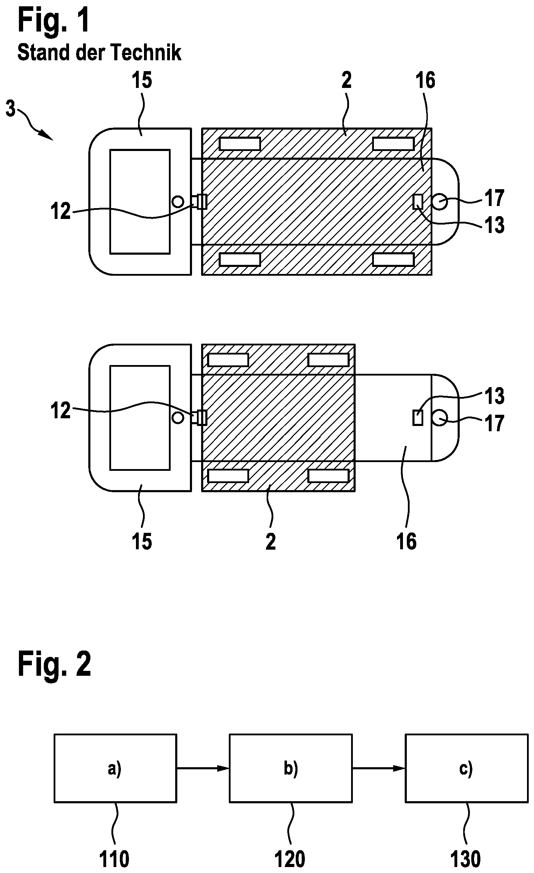

Fig. 1 zeigt beispielhaft und schematisch zwei Flurförderfahrzeuge 3 nach dem Stand der Technik in Draufsicht. Die Flugförderfahrzeuge 3 weisen jeweils einen Vorderaufbau 15 und eine Ladeplattform 16 auf. Auf dem oberen der beiden Flugförderfahrzeuge 3 ist ein Warenträger 2 mit 600 mm Länge (sogenannter 600er Dolly) mit stabiler Beladung an der Rückseite des Vorderaufbaus 15 aufgeladen. Auf dem unteren der beiden Flugförderfahrzeuge 3 ist ein Warenträger 2 mit 400 mm Länge (sogenannter 400er Dolly) mit stabiler Beladung an der Rückseite des Vorderaufbaus 15 aufgeladen.

Die Flugförderfahrzeuge 3 weisen weiterhin jeweils zwei Ladeplattform-Sensoren 12, 13 und mindestens einen Sicherheitssensor 17 auf. Der vordere Ladeplattform-Sensor 12 dient zur Erkennung der korrekten Lagerung des Warenträgers 2 auf der Ladeplattform 16. Der hintere Ladeplattform-Sensor 13 dient zur Erkennung der Länge des Warenträgers. Bei den zwei Ladeplattform-Sensoren 12, 13 handelt es sich üblicherweise jeweils um einen induktiven Sensor. Somit beschränkt sich die "Erkennung" der Länge des Warenträgers nach dem Stand der Technik in der Regel darauf zu erkennen, ob bei einem bis zum Vorderaufbau 15 aufgeladenen und damit im Bereich des vorderen Ladeplattform-Sensors 12 detektierbaren Warenträger 2 auch eine Warenträger-Detektion am hinteren Ladeplattform-Sensor 13 erfolgt oder nicht. Damit lässt sich jedoch ausreichend unterscheiden, ob ein kürzerer Warenträger 2 (hier 400er Dolly) aufgeladen ist, der die Ladeplattform 16 nur teilweise überspannt, oder ein längerer Warenträger 2 (hier 600er Dolly) aufgeladen ist, der die Ladeplattform zumindest vollständig überspannt.

Das hier beschriebene Verfahren erlaubt in vorteilhafter Weise, dass zumindest der hintere Ladeplattform-Sensor 13 eingespart werden kann.

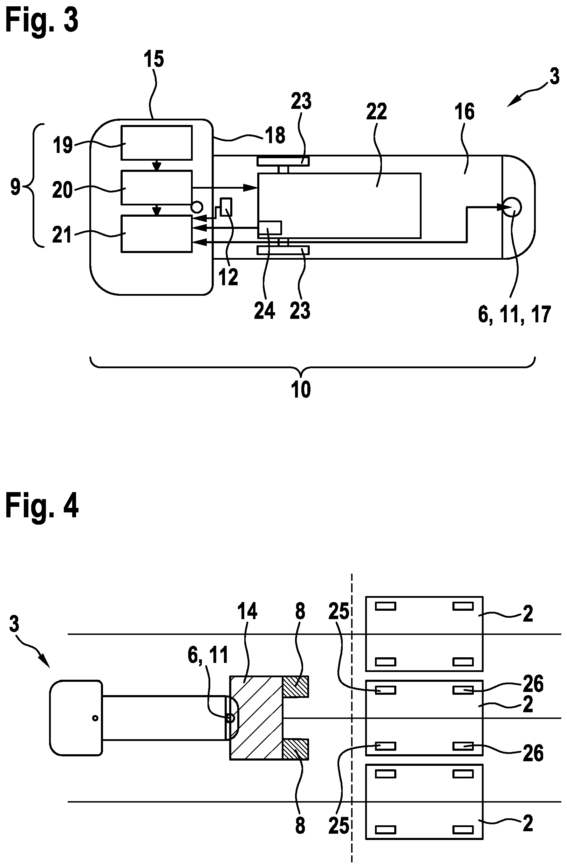

Fig. 2 zeigt schematisch einen beispielhaften Ablauf des hier vorgestellten Verfahrens. Das Verfahren dient zum Erfassen einer Information über die Ausbreitung 1 eines Warenträgers 2, der mittels eines zumindest teilweise automatisiert betreibbaren Flurförderfahrzeugs 3 transportierbar ist, in mindestens einer Ausbreitungsrichtung 4 (vgl. Fig. 3 bis 7). Die mit den Blöcken 110, 120 und 130 dargestellte Reihenfolge der Schritte a), b) und c) ist beispielhaft und kann zur Durchführung des Verfahrens beispielsweise zumindest einmal in der dargestellten Reihenfolge durchlaufen werden.

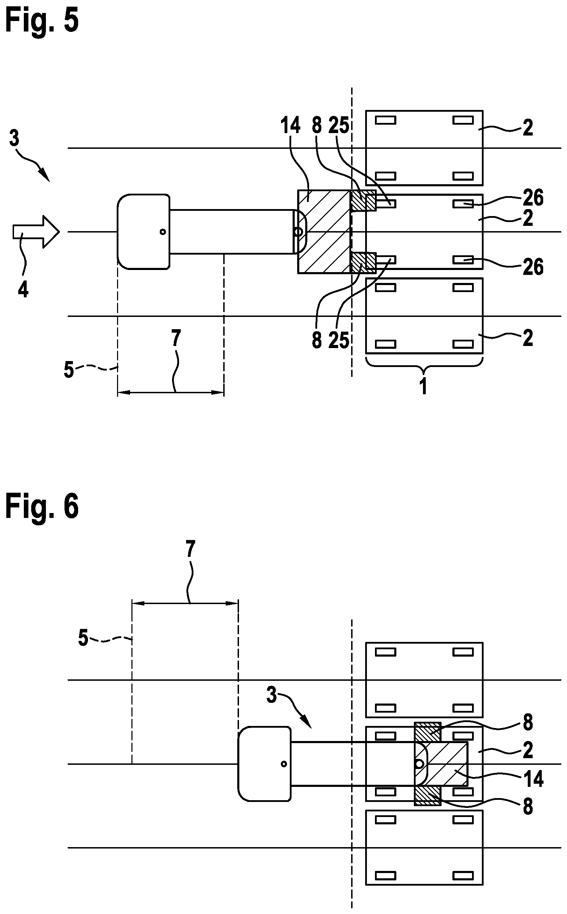

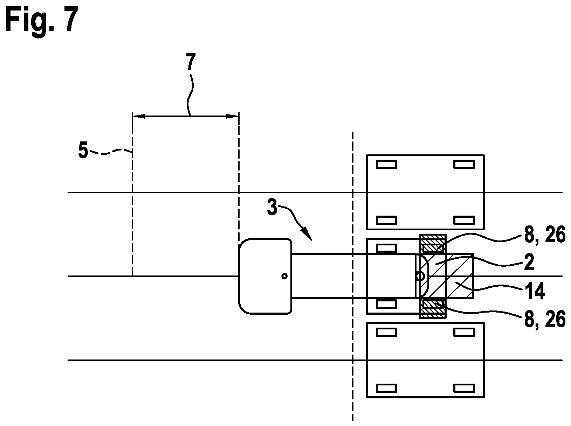

In Block 110 erfolgt gemäß Schritt a) ein Anfahren einer relativ zu dem Warenträger 2 vordefinierten, initialen Position 5, wobei das Erreichen der initialen Position 5 mittels einer Sensor-Einrichtung 6 des Flurförderfahrzeugs 3 detektiert wird (vgl. Figuren 4 und 5). In Block 120 erfolgt gemäß Schritt b) ein Abfahren einer vordefinierten Strecke 7 entlang der Ausbreitungsrichtung 4, ausgehend von der initialen Position 5 (vgl. Figuren 5 und 6). In Block 130 erfolgt gemäß Schritt c) ein Durchführen eines weiteren Detektionsvorgangs mittels derselben Sensor-Einrichtung 6 des Flurförderfahrzeugs 3, nachdem die vordefinierte Strecke 7 abgefahren wurde (vgl. Figuren 6 und 7).

Fig. 3 zeigt beispielhaft und schematisch eine Ausführungsform eines hier beschriebenen Flurförderfahrzeugs 3 in Schnittdarstellung. Das Flurförderfahrzeugs 3 ist für einen zumindest teilweise automatisierten oder autonomen (Fahr-)Betrieb eingerichtet. Weiterhin ist das Flurförderfahrzeug 3 zur Durchführung eines hier beschriebenen Verfahrens eingerichtet. Hierzu weist das Flurförderfahrzeug 3 beispielhaft ein hier auch beschriebenes System 10 auf. Das System 10 weist ein hier auch beschriebenes Steuergerät 9 und eine Sensor-Einrichtung 6, die mit dem Steuergerät 9 zur Datenübertragung verbindbar bzw. verbunden ist, auf. Das Steuergerät 9 ist zur Durchführung des beschriebenen Verfahrens eingerichtet.

Das Flurförderfahrzeug 3 weist einen Vorderaufbau 15 und eine Ladeplattform 16 auf. Der Vorderaufbau 15 hat hin zu der Ladeplattform 16 eine im wesentlichen vertikale Rückwand 18. In dem Bereich, in dem die Ladeplattform 16 an die Rückwand 18 angrenzt bzw. an dieser endet, ist beispielhaft ein Ladeplattform-Sensor 12 des Flurförderfahrzeugs 3 angeordnet. Dieser Bereich liegt in der Regel am vorderen Ende der Ladeplattform 16. Der Ladeplattform-Sensor 12 dient üblicherweise zur Erkennung der korrekten Lagerung des Warenträgers 2 auf der Ladeplattform 16. Korrekt ist die Lagerung des Warenträgers 2 insbesondere dann, wenn der Warenträger 2 ausreichend nah zu der Rückwand 18 angeordnet ist. Der Ladeplattform-Sensor 12 kann beispielsweise ein induktiver Sensor sein. Weiterhin kann der Ladeplattform-Sensor 12 nach oben ausgerichtet sein.

Weiterhin weist das Flurförderfahrzeug 3 hier beispielhaft im Bereich des hinteren Endes der Ladeplattform 16 die Sensor-Einrichtung 6 auf. Die Sensor-Einrichtung 6 ist in der Regel dazu eingerichtet, mindestens ein Warnfeld 8 und/oder mindestens ein Schutzfeld 14 im Umfeld des Flurförderfahrzeug 3, insbesondere hinter dem Flurförderfahrzeug 3 zu überwachen oder zumindest zu diesem Zweck beispielsweise mittels Laserstrahlen abzutasten bzw. zu scannen. Die eigentliche Überwachung kann dann beispielhaft von dem Steuergerät 9 oder einer vergleichbaren Einrichtung des Flurförderfahrzeugs 3 durchgeführt werden. Die Sensor-Einrichtung 6 kann somit (auch) einen Sicherheitssensor 17 des Flurförderfahrzeugs 3 darstellen. Die Sensor-Einrichtung 6 kann vorzugsweise als ein Laserscanner 11 ausgeführt sein oder einen solchen umfassen. Die Sensor-Einrichtung 6 ist in der Regel überwiegend nach hinten oder nach hinten und zu den Seiten (zu der linken Seite und der rechten Seite des Flurförderfahrzeugs 3) ausgerichtet. Es kann dabei vorgesehen sein, dass die Sensor-Einrichtung 6 nicht nach oben ausgerichtet ist. Weiterhin ist in Fig. 3 zu erkennen, dass das Flurförderfahrzeug 3 hier beispielhaft ohne einen hinteren Ladeplattform-Sensor (vgl. in Fig. 1: Ladeplattform-Sensor 13) ausgeführt ist, da dieser aufgrund des hier beschriebenen und mit dem Flurförderfahrzeug 3 gemäß Fig. 3 durchführbaren Verfahrens vorteilhaft eingespart werden kann.

Das Steuergerät 9 umfasst hier beispielhaft ein Robotersteuermodul 19 (engl.: Robot Control Unit; kurz: RCU), ein Bewegungssteuermodul 20 (engl.: Motion Control Unit; kurz MCU) und ein Sicherheitssteuermodul 21 (engl.: Safety Control Unit; kurz SCU). Das Robotersteuermodul 19 gibt hier beispielsweise die gewünschte Fahrtrichtung und die Geschwindigkeit an das Bewegungssteuermodul 20. Das Bewegungssteuermodul 20 gibt die gewünschte Fahrtrichtung hier beispielhaft weiter an das Sicherheitssteuermodul 21, berechnet die Solldrehzahlen und gibt diese an eine Motoreinrichtung 22 des Flurförderfahrzeugs 3. Die Motoreinrichtung 22 kann einen oder mehrere (Elektro-)Motoren aufweisen, die ggf. über ein Getriebe oder direkt mit angetriebenen Rädern 23 des Flurförderfahrzeugs 3, ggf. im Sinne individuell angetriebener Räder 23 wirkverbunden sind.

Weiterhin kann das Flurförderfahrzeug 3 einen oder mehrere Drehzahlgeber 24 (zum Beispiel SIL2-Drehgeber) aufweisen, welche die Ist-Drehzahlen der Motoren 22 bzw. Räder 23 an das Sicherheitssteuermodul 21 übermitteln. Das Sicherheitssteuermodul 21 kann hier beispielsweise aus den Ist-Drehzahlen den Verfahrweg bzw. die zurückgelegte Strecke 7 (sichere Radodometrie) berechnen und/oder insbesondere in Abhängigkeit der gewünschten Fahrtrichtung das entsprechende mindestens eine Warnfeld 8 und/oder mindestens eine Schutzfeld 14 (Laserscannerfeld) schalten.

Zur Durchführung des Verfahrens kann das Steuergerät 9 beispielsweise für folgende Vorgehensweise eingerichtet sein: Während ein Warenträger 2 angefahren wird (vgl. Fig. 4) schaltet das Sicherheitssteuermodul 21 zwei Warnfelder 8 und ein Schutzfeld 14, die mittels der Sensor-Einrichtung 6 (hier beispielhaft Laserscanner 11) überwacht werden. Dabei werden die zwei Warnfelder 8 hinter dem Schutzfeld 14 und mit einem derartigen (vordefinierbaren) seitlichen Abstand zueinander geschaltet, dass sie gleichzeitig zwei Vorderräder 25 des Warenträgers 2 (mit jeweils (nur) einem der Vorderräder 25 in einem der Warnfelder 8) erfassen können. Der Anfahrvorgang wird damit fortgesetzt, bis das Sicherheitssteuermodul 21 erkennt, dass die beiden Warnfelder 8 auslösen (Dolly-Erkennung). Die dabei erreichte Position wird hier auch als initiale Position 5 bezeichnet (vgl. Fig. 5). Dies stellt ein Beispiel dafür dar, dass und ggf. wie gemäß Schritt a) ein Anfahren einer relativ zu dem Warenträger 2 vordefinierten, initialen Position 5 erfolgen kann, wobei das Erreichen der initialen Position 5 mittels einer Sensor-Einrichtung 6 des Flurförderfahrzeugs 3 detektiert wird.

Danach kann das Sicherheitssteuermodul 21 die Sensor-Einrichtung 6 auf ein schmaleres Schutzfeld 14 umschalten, wobei ggf. die (Längs-)Position der Warnfelder 8 hin zu dem Flurförderfahrzeug 3 rücken kann (vgl. Fig. 6). Mit dieser Konfiguration kann der Ladevorgang in Längsrichtung des Warenträgers 2 fortgesetzt werden, um eine vordefinierte Strecke 7, ausgehend von der initialen Position 5 abzufahren. Dies stellt ein Beispiel dafür dar, dass und ggf. wie gemäß Schritt b) ein Abfahren einer vordefinierten Strecke 7 entlang der Ausbreitungsrichtung 4, ausgehend von der initialen Position 5, erfolgen kann.

Nachdem die Strecke 7 zurückgelegt wurde, kann das Sicherheitssteuermodul 21 die momentane bzw. dann aktuelle Erfassung der Sensor-Einrichtung 6 innerhalb der beiden Warnfelder 8 erneut auswerten. Dies stellt ein Beispiel dafür dar, dass und ggf. wie gemäß Schritt c) ein Durchführen eines weiteren Detektionsvorgangs mittels derselben Sensor-Einrichtung 6 des Flurförderfahrzeugs 3 erfolgen kann, nachdem die vordefinierte Strecke 7 abgefahren wurde. Wenn in diesem Zustand keine Erfassung in den Warnfeldern 8 erkannt wird oder zumindest keine Erfassung von weiteren Rädern, insbesondere Hinterrädern 26 des Warenträgers 2 erkannt wird, kann damit darauf zurückgeschlossen werden, dass ein längerer Warenträger 2 (hier 600er Dolly) aufgeladen ist. Wenn in diesem Zustand eine Erfassung in den Warnfeldern 8, insbesondere eine Erfassung von weiteren Rädern, insbesondere Hinterrädern 26 des Warenträgers 2 erkannt wird, kann damit darauf zurückgeschlossen werden, dass ein kürzerer Warenträger 2 (hier 400er Dolly) aufgeladen ist. Somit können im Verlauf des Ladevorgangs die Zustände der beiden Warnfelder 8 vorteilhaft zur Unterscheidung zwischen verschiedenen Warenträgern 2, insbesondere zwischen 400er und 600er Dollys verwendet werden.

Die Figuren 4 bis 7 zeigen beispielhaft und schematisch eine vorteilhafte Anwendung des hier beschriebenen Verfahrens in Draufsicht. Dabei wird beispielhaft ein mit dem Verfahren möglicher Ablauf einer Ladesituation, in beispielsweise einem Supermarkt, gezeigt. Dies stellt auch ein Beispiel dafür dar, dass und ggf. wie die Schritte a) bis c) während eines Aufladens des Warenträgers 2 auf das Flurförderfahrzeug 3 durchgeführt werden können.

In den Figuren 4 und 5 ist dabei gezeigt, dass das Flurförderfahrzeug 2 mit der Sensor-Einrichtung 6 (rückwärtsgerichteter Laserscanner 11) beim Einfahren in einen Supermarkt den hinter sich befindlichen Bereich scannen bzw. überwachen kann. Dabei können zwei Warnfelder 8 unabhängig voneinander das jeweils linke und rechte (Vorder-)Rad 25 (bzw. Rad 25 der Vorderachse) des aufzunehmenden Warenträgers 2 (hier beispielhaft Bodenroller bzw. Dolly) erkennen. Dies beschreibt somit auch ein Beispiel dafür, dass und ggf. wie die Sensor-Einrichtung 6 mindestens ein Warnfeld 8, hier insbesondere zwei Warnfelder 8 im Umfeld des Flurförderfahrzeugs 3 überwachen kann.

Beispielhaft kann hier die Sensor-Einrichtung 6 die Warnfelder 8 mittels Laserstrahlen scannen.

In den Figuren 6 und 7 ist gezeigt, dass nach erfolgreicher Erkennung der Vorderräder 25 der Laserscanner 11 auf ein schmaleres Schutzfeld 14 umgeschaltet werden kann und damit die vordefinierte Streck 7 gefahren werden kann, die hier beispielhaft insbesondere zur Unterscheidung eines 600er Dollys (Fig. 6: die Warnfelder 8 sind frei) und eines 400er Dollys (Fig. 7: die Warnfelder 8 erkennen die Hinterräder 26 bzw. Räder 26 der zweiten Dollyachse) geeignet ist. In diesem Moment kann das Sicherheitssteuermodul 21 die Zustände der Warnfelder 8 des Laserscanners 11 (erneut) abfragen und diese vorzugsweise als Information für den weiteren Auf- und Abladevorgang abspeichern.

Die Figuren 4 bis 7 veranschaulichen damit auch eine Verwendung eines rückseitig an einem zumindest teilweise automatisiert betreibbaren Flurförderfahrzeugs 3 angebrachten Laserscanners 11 zum automatisierten Erfassen einer Information über die Ausbreitung 1 eines Warenträgers 2, der mittels des Flurförderfahrzeugs 3 transportiert werden soll, in mindestens einer Ausbreitungsrichtung 4.

Somit werden ein Verfahren, ein Computerprogramm, ein maschinenlesbares Speichermedium, ein Steuergerät, ein System, ein Flurförderfahrzeug sowie eine Verwendung angegeben, welche die im Zusammenhang mit dem Stand der Technik beschriebenen Nachteile bzw. Probleme zumindest teilweise lösen. Insbesondere kann bei einem zumindest teilweise automatisiert betreibbaren Flurförderfahrzeug, welches insbesondere auch für einen Mischbetrieb geeignet sein soll, bei gleichwohl möglichst hoher Betriebssicherheit, die Anzahl der verwendeten Sensoren (um insbesondere den zweiten bzw. hinteren (induktiven) Ladeplattform-Sensor) reduziert werden.

## Patentansprüche

1. Verfahren zum Erfassen einer Information über die Ausbreitung (1) eines Warenträgers (2), der mittels eines zumindest teilweise automatisiert betreibbaren Flurförderfahrzeugs (3) transportierbar ist, in mindestens einer Ausbreitungsrichtung (4), bei dem zumindest folgende Schritte automatisiert von dem Flurförderfahrzeug (3) durchgeführt werden:
a) Anfahren einer relativ zu dem Warenträger (2) vordefinierten, initialen Position (5), wobei das Erreichen der initialen Position (5) mittels einer Sensor-Einrichtung (6) des Flurförderfahrzeugs (3) detektiert wird, wobei die initiale Position (5) derart relativ zum Warenträger (2) vordefiniert ist, dass es sich hierbei um diejenige Position handelt, in der mindestens ein vorderes Identifikationsmittel (25) des Warenträgers (2) in einem mittels der Sensor-Einrichtung (6) überwachten Warnfeld (8) liegt,
b) Abfahren einer vordefinierten Strecke (7) entlang der Ausbreitungsrichtung (4), ausgehend von der initialen Position (5), wobei die Strecke (7) so vordefiniert ist, dass sie geeignet ist, um mindestens zwei Typen von Warenträgern (2) voneinander unterscheiden zu können, die sich in ihrer Ausbreitung entlang der Ausbreitungsrichtung (4) voneinander unterscheiden,
c) Durchführen eines weiteren Detektionsvorgangs mittels derselben Sensor-Einrichtung (6) des Flurförderfahrzeugs (3), nachdem die vordefinierte Strecke (7) abgefahren wurde, wobei die Strecke (7) so vordefiniert ist, dass bei einem ersten der mindestens zwei Typen von Warenträgern (2) bei dem Detektionsvorgang gemäß Schritt c) mindestens ein hinteres Identifikationsmittel (26) des Warenträgers (2) in dem mittels der Sensor-Einrichtung (6) überwachten Warnfeld (8) liegt,
d) Auswerten des Detektionsvorgangs aus Schritt c), um in Abhängigkeit des Detektionsergebnisses aus Schritt c) zu ermitteln, welcher Typ von Warenträger (2) gerade unterfahren wird.

2. Verfahren nach Anspruch 1, wobei die Schritte a) bis c) während eines Aufladens des Warenträgers (2) auf das Flurförderfahrzeug (3) durchgeführt werden.

3. Verfahren nach Anspruch 1 oder 2, wobei mittels der Sensor-Einrichtung (6) mindestens ein Warnfeld (8) im Umfeld des Flurförderfahrzeugs (3) überwacht wird.

4. Verfahren nach Anspruch 3, wobei die Sensor-Einrichtung (6) das mindestens eine Warnfeld (8) mittels Laserstrahlen scannt.

5. Steuergerät (9) für ein zumindest teilweise automatisiert betreibbares Flurförderfahrzeug (3), eingerichtet zur Durchführung eines Verfahrens nach einem der Ansprüche 1 bis 4.

6. System (10) für ein zumindest teilweise automatisiert betreibbares Flurförderfahrzeug (3), mit einem Steuergerät (9) nach Anspruch 5 und einer Sensor-Einrichtung (6), die mit dem Steuergerät (9) zur Datenübertragung verbindbar ist.

7. Zumindest teilweise automatisiert betreibbares Flurförderfahrzeug (3) mit einem System (10) nach Anspruch 6.

8. Zumindest teilweise automatisiert betreibbares Flurförderfahrzeug (3) nach Anspruch 7 aufweisend einen rückseitig an dem Flurförderfahrzeug (3) angebrachten Laserscanner (11) zum automatisierten Erfassen einer Information über die Ausbreitung (1) eines Warenträgers (2.

9. Computerprogramm umfassend Befehle, die bewirken, dass das Steuergerät (9) des Flurförderfahrzeugs nach Anspruch 5, die Schritte des Verfahrens nach einem der Ansprüche 1 bis 4 ausführt.

10. Maschinenlesbares Speichermedium, auf dem das Computerprogramm nach Anspruch 9 gespeichert ist.

## Claims

1. Method for sensing information concerning the extent (1) of a product carrier (2), which can be transported by means of a guided vehicle (3) that can be operated in an at least partially automated manner, in at least one direction of extent (4), in which at least the following steps are carried out in an automated manner by the guided vehicle (3):
a) driving to an initial position (5), predefined in relation to the product carrier (2), the reaching of the initial position (5) being detected by means of a sensor device (6) of the guided vehicle (3), the initial position (5) being predefined in such a way in relation to the product carrier (2) that here it is the position in which at least one front means of identification (25) of the product carrier (2) lies in a warning zone (8) monitored by means of the sensor device (6),
b) driving a predefined distance (7) along the direction of extent (4), starting from the initial position (5), the distance (7) being predefined such that it is suitable for being able to differentiate from one another at least two types of product carriers (2) that differ from one another in their extent along the direction of extent (4),
c) carrying out a further detection operation by means of the same sensor device (6) of the guided vehicle (3) once the predefined distance (7) has been driven, the distance (7) being predefined such that, in the case of a first one of the at least two types of product carriers (2), in the detection operation according to step c) at least one rear means of identification (26) of the product carrier (2) lies in the warning zone (8) monitored by means of the sensor device (6),
d) evaluating the detection operation from step c), in order to determine in dependence on the detection result from step c) which type of product carrier (2) is being driven under.

2. Method according to Claim 1, steps a) to c) being carried out during a loading of the product carrier (2) onto the guided vehicle (3).

3. Method according Claim 1 or 2, at least one warning zone (8) in the surrounding area of the guided vehicle (3) being monitored by means of the sensor device (6).

4. Method according to Claim 3, the sensor device (6) scanning the at least one warning zone (8) by means of laser beams.

5. Control unit (9) for a guided vehicle (3) that can be operated in an at least partially automated manner, designed for carrying out a method according to one of Claims 1 to 4.

6. System (10) for a guided vehicle (3) that can be operated in an at least partially automated manner, with a control unit (9) according to Claim 5 and a sensor device (6), which can be connected to the control unit (9) for data transmission.

7. Guided vehicle (3) that can be operated in an at least partially automated manner, with a system (10) according to Claim 6.

8. Guided vehicle (3) that can be operated in an at least partially automated manner according to Claim 7 having a laser scanner (11) attached to the rear side of the guided vehicle (3) for the automated sensing of information concerning the extent (1) of a product carrier (2).

9. Computer program comprising commands which have the effect that the control unit (9) of the guided vehicle according to Claim 5 performs the steps of the method according to one of Claims 1 to 4.

10. Machine-readable storage medium, on which the computer program according to Claim 9 is stored.

## Revendications

1. Procédé de détermination d'informations concernant l'étendue (1) d'un support de marchandises (2), qui peut être transporté au moyen d'un chariot de manutention (3) à fonctionnement au moins partiellement automatisé, dans au moins une direction d'étendue (4), dans lequel au moins les étapes suivantes sont exécutées de manière automatisée par le chariot de manutention (3) :
a) le rapprochement d'une position initiale (5) prédéfinie par rapport au support de marchandises (2), l'atteinte de la position initiale (5) étant détectée au moyen d'un dispositif capteur (6) du chariot de manutention (3), la position initiale (5) étant prédéfinie par rapport au support de marchandises (2) de telle sorte que cette position soit une position à laquelle au moins un moyen d'identification avant (25) du support de marchandises (2) se trouve dans une zone d'avertissement (8) surveillée au moyen du dispositif capteur (6),
b) le parcours d'une distance prédéfinie (7) le long de la direction d'étendue (4), à partir de la position initiale (5), la distance (7) étant prédéfinie de telle sorte qu'elle permette de différencier l'un de l'autre au moins deux types de supports de marchandises (2) qui se différencient l'un de l'autre par leur étendue le long de la direction d'étendue (4),
c) la réalisation d'une autre opération de détection au moyen du même dispositif capteur (6) du chariot de manutention (3), après que la distance prédéfinie (7) a été parcourue, la distance (7) étant prédéfinie de telle sorte que dans le cas d'un premier desdits au moins deux types de supports de marchandises (2), lors de l'opération de détection selon l'étape c), au moins un moyen d'identification arrière (26) du support de marchandises (2) se trouve dans la zone d'avertissement (8) surveillée au moyen du dispositif capteur (6),
d) l'évaluation de l'opération de détection à partir de l'étape c), pour déterminer en fonction du résultat de la détection provenant de l'étape c) le type de support de marchandises (2) en-dessous duquel un déplacement est effectué.

2. Procédé selon la revendication 1, dans lequel les étapes a) à c) sont exécutées pendant un chargement du support de marchandises (2) sur le chariot de manutention (3).

3. Procédé selon la revendication 1 ou 2, dans lequel au moins une zone d'avertissement (8) dans l'environnement du chariot de manutention (3) est surveillée au moyen du dispositif capteur (6).

4. Procédé selon la revendication 3, dans lequel le dispositif capteur (6) balaye ladite au moins une zone d'avertissement (8) au moyen de faisceaux laser.

5. Appareil de commande (9) destiné à un chariot de manutention (3) à fonctionnement au moins partiellement automatisé, configuré pour mettre en œuvre un procédé selon l'une des revendications 1 à 4.

6. Système (10) destiné à un chariot de manutention (3) à fonctionnement au moins partiellement automatisé, comprenant un appareil de commande (9) selon la revendication 5 et un dispositif capteur (6), qui peut être connecté à l'appareil de commande (9) pour la transmission de données.

7. Chariot de manutention (3) à fonctionnement au moins partiellement automatisé, comprenant un système (10) selon la revendication 6.

8. Chariot de manutention (3) à fonctionnement au moins partiellement automatisé, selon la revendication 7, comportant un dispositif de balayage à laser (11) monté à l'arrière du chariot de manutention (3) pour la détermination automatisée d'informations concernant l'étendue (1) d'un support de marchandises (2).

9. Programme informatique, comprenant des instructions qui font qu'un appareil de commande (9) selon la revendication 5 exécute les étapes du procédé selon l'une quelconque des revendications 1 à 4.

10. Support de stockage lisible par machine sur lequel est stocké le programme informatique selon la revendication 9.
